# EUROPÄISCHE PATENTSCHRIFT

(11) **EP 2 816 347 B1**
(45) Veröffentlichungstag und Bekanntmachung des Hinweises auf die Patenterteilung: **07.10.2015**
(21) Anmeldenummer: 13003104.0
(22) Anmeldetag: 18.06.2013
(51) Int. Cl.: G01N 25/18, G01N 29/04

(54) **Verfahren zum zumindest qualitativen Bestimmen mindestens einer physikalischen und/oder chemischen Eigenschaft eines Laminatpaneels**
Method for the qualitative determination of at least one physical and/or a chemical property of a laminate panel
Procédé de détermination au moins qualitative d'au moins une propriété physique et/ou chimique d'un panneau de laminé

(43) Veröffentlichungstag der Anmeldung: 24.12.2014
(73) Patentinhaber: Flooring Technologies Ltd., Pieta PTA 9044 (MT)
(72) Erfinder: Weigl, Martin, 1230 Wien (AT)
(74) Vertreter: Friedrich, Andreas

(56) Entgegenhaltungen:
- DD-A1- 152 422
- US-A1- 2008 295 602
- Jason Dorrier: "Sensors in Smartphones: Galaxy S4 Adds Pressure, Temperature, and Humidity Sensors", SingularityHUB, 1. April 2013 (2013-04-01), XP055074706, Gefunden im Internet: URL:http://singularityhub.com/2013/04/01/s ensors-in-smartphones-galaxy-s4-adds-press ure-temperature-and-humidity-sensors/ [gefunden am 2013-08-09]
- Anonymous: "Sensordrone for Smartphones", Sensorcon.Com , 1. Januar 2013 (2013-01-01), XP055074685, Gefunden im Internet: URL:http://www.sensorcon.com/sensordrone/ [gefunden am 2013-08-09]
- Smart Tools Co.: "Smart Tools co. - Google Play Store", Google , 8. August 2013 (2013-08-08), XP055074687, Gefunden im Internet: URL:https://play.google.com/store/apps/dev eloper?id=Smart%20Tools%20co. [gefunden am 2013-08-09]

## Beschreibung

Die Erfindung betrifft ein Verfahren zum zumindest qualitativen Bestimmen mindestens einer physikalischen und/oder chemischen Eigenschaft eines Laminatpaneels mittels eines Mobilfunkgerätes sowie ein entsprechendes Mobilfunkgerät.

Die physikalischen und/oder chemischen Eigenschaften eines Laminatpaneels sind in vielen Branchen zumindest mitentscheidend für eine Kaufentscheidung eines Kunden. Diese physikalischen Eigenschaften können beispielsweise eine Wärme- oder Schalldämmeigenschaft sein. Auch die Abschirmung elektromagnetischer Felder kann eine derartige für den Kauf entscheidende physikalische Eigenschaft sein.

Zu den chemischen Eigenschaften, die die Kaufentscheidung eines Kunden beeinflussen können, zählen insbesondere die Ausgaseigenschaften eines Laminatpaneels. Je nach verwendeten Werkstoffen bei der Herstellung des Laminatpaneels ist es möglich, dass bestimmte Substanzen, beispielsweise Formaldehyd, aus den Laminatpaneelen ausgasen. Da diese Substanzen gesundheitsschädlich sein können, ist die Frage, wie viel dieser Substanzen von den Laminatpaneelen emittiert wird, für den Kunden von großem Interesse. Natürlich können auch andere Substanzen aus dem Laminatpaneel austreten. Dies umfasst insbesondere organische Substanzen, wie beispielsweise die flüchtigen organischen Verbindungen (VOC, volatile organic compounds), aber auch andere Substanzen, die gegebenenfalls mehr oder weniger gesundheitsschädlich sein können.

Laminatfußbodenpaneele beispielsweise müssen heute eine Vielzahl unterschiedlicher Anforderungen erfüllen und Eigenschaften aufweisen. Ist beispielsweise ein Raum mit einem Laminatfußboden ausgelegt, kommt es beim Begehen dieses Fußbodens zu einem Raum- oder Begehschall, der in dem mit dem Laminatfußboden ausgelegten Raum wahrgenommen wird. Zusätzlich entsteht Trittschall, der in einem unterhalb dieses Raumes liegenden Raum wahrgenommen werden kann. Sowohl der Raum- oder Begehschall als auch der Trittschall sollen dabei möglichst gering ausfallen, um eine möglichst geringe Belästigung der Bewohner durch die Geräusche hervorzurufen.

Laminatfußböden und Laminatpaneele sind Werkstoffverbunde, welche bevorzugt eine innenliegende Trägerplatte sowie an den großflächigen Ober- und Unterseiten Beschichtungen aufweisen. Für diesen Zweck werden üblicherweise plattenförmige Holzwerkstoffe, beispielsweise hochdichte Faserplatten (HDF) als Trägerplatten eingesetzt. Die Oberflächen dieser HDF-Platten werden durch unterschiedliche Verfahren veredelt, um die gewünschten Produkteigenschaften, beispielsweise die Abriebfestigkeit, die Kratzbeständigkeit, die Beständigkeit gegenüber äußerer stoßartiger Krafteinwirkung oder ähnliches zu erzielen. Je nach Nutzungsklasse entsprechend EN 13329 werden unterschiedliche hohe Anforderungen an die Produktoberfläche und den gesamten Werkstoff insbesondere für die genannten Eigenschaften gestellt.

Laminatpaneele und Laminatfußböden verfügen über eine dekorative Schicht, die entweder direkt auf dem Werkstoff, beispielsweise durch einen Direktdruck, oder im Vorfeld auf einem zu applizierenden Dekorpapier aufgebracht wird. Ein derartiges Dekorpapier kann zum Zeitpunkt der Applikation wiederum entweder durch ein Harz imprägniert oder nicht imprägniert sein. Im Falle des Direktdruckes, bei dem das Dekor direkt auf die Trägerplatte aufgedruckt wird, kann dies nach entsprechender Oberflächenvorbehandlung der Trägerplatte durch indirekten Tiefdruck oder mittels Digitaldruck erfolgen.

Die Versiegelung der Oberfläche kann ebenfalls durch unterschiedliche Verfahren erfolgen. Es können Lacksysteme, die beispielsweise mittels UV-Strahlung oder Elektronenstrahlung oder autokatalytisch aushärten, oder Harze zum Einsatz kommen. Hierbei sind unterschiedliche Lacksysteme je nach Anforderung und verwendeter Technologie verwendbar.

Zur Versiegelung der Oberfläche mittels Harzen werden üblicherweise Melaminharze verwendet, die beispielsweise als Overlaypapier, Flüssig-Overlay oder pulverförmiges Overlay auf die zu versiegelnde Oberfläche aufgebracht werden. Die Aushärtung erfolgt üblicherweise in Kurztaktpressen unter Einwirkung von Temperatur und Druck.

Die Unterseite der Trägerplatte kann in vereinfachten Verfahren aber prinzipiell unter Anwendung der gleichen Technologien wie die dekorative Oberseite versiegelt werden. Auf die Unterseite kann zudem ein Gegenzug aufgebracht werden, um so die inneren Spannungen in dem Laminatpaneel bzw. dem Fußbodenlaminat, die aus der Beschichtung der Oberseite herrühren, zu reduzieren.

Die Veredelung der Seiten der Trägerplatte erfolgt herkömmlicherweise an Halbformatplatten, die beispielsweise eine Kantenlänge von 2800 x 2070 mm aufweisen. Je nach verwendeter Anlage kann auch eine sogenannte Mehrfachlänge verwendet werden, die beispielsweise die zweifache oder dreifache Länge einer derartigen Halbformatplatte aufweisen.

Im Zuge der Weiterverarbeitung werden die Platten dann zu einzelnen Paneelen aufgetrennt, an die zum seitlichen Verbinden einzelner Paneele in einen Verlegeverbund Verbindungsmittel beispielsweise nach Art von Nut und Feder mit Verriegelungselementen angebracht werden, die entweder einstückig aus dem Trägermaterial herausgearbeitet sind oder als separate Bauteile vorliegen.

Die so hergestellten Laminatpaneele werden in kleinen Stückzahlen zu Paketen verpackt, so dass oftmals ein Teil der dekorativen Oberfläche der Laminatpaneele sichtbar ist.

Melaminharzbeschichtete Laminatfußböden weisen in der Regel zwei ausgeprägte Eigenschaften auf. Zum einen kommt es bei der Aushärtung zu einem erheblichen Volumenschwund aufgrund eines Kondensationsprozesses. Dieser führt zu erheblichen Spannungen in der Melaminharzschicht, so dass bei mechanischen Anregungen die bereits beschriebenen Geräusche und akustisch wahrnehmbare Schwingungen entstehen. Zudem weisen Melaminharze beispielsweise im Vergleich zu anderen Kunstharzen eine erhöhte Wärmeleitfähigkeit auf, so dass der Fußboden beispielsweise beim barfüßigen Begehen als kalt empfunden wird, da die Körperwärme durch das Melaminharz stark augeleitet wird. Andere Kunstharze oder bei der Herstellung von Laminatpaneelen verwendete Lacke und Lacksysteme weisen eine im Vergleich zu Melaminharz geringere Wärmeleitfähigkeit auf, so dass ein Fußboden, der aus mit diesen Materialien hergestellten Laminatpaneelen besteht, als nicht so kalt empfunden wird.

Aus der DD 0152 422 ist ein Verfahren und ein Messgerät zur Bestimmung der Wärmeeindringfähigkeit bzw. des Wärmeeindringwiderstandes bekannt, bei dem das Messgerät mit einer ebenen Heizfläche auf den Prüfling aufgelegt wird. Über Thermoelemente wird die daraufhin veränderte Berührungstemperatur ausgewertet.

Nachteilig ist jedoch, dass der Kunde beispielsweise in einem Fachgeschäft für derartige Gegenstände, beispielsweise Laminatfußbodenpaneele, diese physikalischen und/oder chemischen Eigenschaften nicht selbst ermitteln oder prüfen kann und so die Eigenschaften unterschiedlicher Produkte gegebenenfalls unterschiedlicher Hersteller nicht miteinander vergleichen kann. Er ist auf oftmals vage Werbeaussagen, wie beispielsweise "gute Schalldämmeigenschaften" angewiesen, die einen Vergleich unterschiedlicher Produkte unmöglich machen. Dies wird zudem dadurch erschwert, dass es sich gerade bei derartigen Eigenschaften aufgrund der sehr hohen Subjektivität in der Wahrnehmung um schwer objektiv zu erfassende Eigenschaften handelt. Oftmals werden die Angaben technischer Eigenschaften beispielsweise basierend auf Prüfzertifikaten angegeben. Diese sind für den Laien jedoch oftmals nicht bekannt oder nicht nachvollziehbar, so dass eine derartige Angabe für den Endkunden oft wenig hilfreich ist.

Der Erfindung liegt daher die Aufgabe zugrunde, ein Verfahren zum zumindest qualitativen Bestimmen mindestens einer physikalischen und/oder chemischen Eigenschaft eines Laminatpaneels anzugeben, das schnell und ohne großen apparativen Aufwand direkt am Laminatpaneel durchführbar ist.

Die Erfindung löst die gestellte Aufgabe durch ein Verfahren zum zumindest qualitativen Bestimmen mindestens einer physikalischen und/oder chemischen Eigenschaft eines Laminatpaneels mittels eines Mobilfunkgerätes, wobei das Verfahren die folgenden Schritte aufweist:
a) Anordnen des Mobilfunkgerätes an einer Oberfläche des Laminatpaneels,
b) Messen mindestens einer physikalischen und/oder chemischen Messgröße mittels eines in dem Mobilfunkgerät integrierten oder mit dem Mobilfunkgerät verbundenen Messinstrumentes und
c) zumindest qualitatives Bestimmen der mindestens einen physikalischen und/oder chemischen Eigenschaft aus der gemessenen wenigstens einen physikalischen und/oder chemischen Messgröße.

Heutige Mobilfunkgeräte, insbesondere Smartphones, verfügen über eine Vielzahl unterschiedlicher Funktionen, die durch in dem Mobilfunkgerät integrierte Messinstrumente ermöglicht werden. Messinstrumente können dabei als einzelner Sensor oder Messwertaufnehmer oder aus mehreren Elementen bestehende Messkette vorliegen, die beispielsweise einen Messumformer oder ein Rechengerät aufweist. Diese Messinstrumente werden bei dem erfindungsgemäßen Verfahren dazu verwendet, mindestens eine physikalische und/oder chemische Messgröße des Laminatpaneels zu messen und aus den so erhaltenen Messwerten zumindest qualitativ die mindestens eine gewünschte physikalische und/oder chemische Eigenschaft zu bestimmen. Dazu ist es lediglich nötig, das Mobilfunkgerät an der Oberfläche des Laminatpaneels anzuordnen. Der Bereich, in dem das Mobilfunkgerät an dieser Oberfläche angeordnet wird, und in dem das Mobilfunkgerät mit der Oberfläche in Kontakt kommt, diese also abdeckt oder überdeckt, wird im Folgenden Auflagefläche genannt. Vorteilhafterweise wird dabei das Mobilfunkgerät, insbesondere das Smartphone, so an der Oberfläche des Laminatpaneels angeordnet, dass es mit der einem Display des Mobilfunkgerätes abgewandten Seite an dem Laminatpaneel angeordnet ist. Dies wird besonders einfach dadurch ermöglicht, dass das Mobilfunkgerät, insbesondere das Smartphone, mit der dem Display abgewandten Seite auf die Oberfläche des Laminatpaneels aufgelegt wird.

Das Messen der physikalischen und/oder chemischen Messgröße wird über ein Programm, das beispielsweise in dem Datenspeicher des Mobiltelefons hinterlegt ist, eine sogenannte "App", durchgeführt.

Als besonders vorteilhaft hat sich herausgestellt, wenn die physikalische und/oder chemische Messgröße mehrfach zu unterschiedlichen Zeitpunkten gemessen wird. So kann beispielsweise der zeitliche Verlauf der Messgröße ermittelt und daraus zumindest qualitativ die physikalische und/oder chemische Eigenschaft bestimmt werden. Auf diese Weise können auch Transportgrößen, wie beispielsweise Wärme- und Schallleiteigenschaften beispielsweise aus dem zeitlichen Verlauf der Temperatur oder des Schalls bestimmt werden.

Vorzugsweise werden die Verfahrensschritte a) und b) für unterschiedliche Laminatpaneele durchgeführt und das qualitative Bestimmen der physikalischen und/oder chemischen Eigenschaften findet durch Vergleich der bei den unterschiedlichen Laminatpaneelen gemessenen Messgrößen statt. Dies ist insbesondere für die Fälle sinnvoll, in denen beispielsweise ein exakter Zahlenwert für die physikalische und/oder chemische Eigenschaft nicht benötigt wird, sondern lediglich die physikalische und/oder chemische Eigenschaft mehrerer Laminatpaneele, die beispielsweise Fußbodenlaminatpaneele unterschiedlicher Hersteller sein können, verglichen werden sollen. Durch dieses Verfahren kann folglich an der Verkaufsstelle durch den Kunden selbst einfach und schnell ermittelt werden, welches der Laminatpaneele beispielsweise die beste Wärmedämmung, Trittschalldämmung oder Abschirmung elektromagnetischer Felder oder die geringsten Emissionswerte verschiedener Substanzen, beispielsweise Formaldehyd oder flüchtiger organischer Verbindungen (VOC) aufweist. Der exakte Zahlenwert ist dabei oftmals nicht von Interesse, sondern beispielsweise nur das Verhältnis dieser Messwerte zueinander, so dass der Vergleich der unterschiedlichen Laminatpaneele für den Kunden ausreicht, um eine Kaufentscheidung zu treffen.

Natürlich ist es auch möglich, das qualitative Bestimmen der physikalischen und/oder chemischen Eigenschaft durch einen Vergleich mit beispielsweise im Datenspeicher des Mobilfunkgerätes hinterlegten Werten durchzuführen. So ist es beispielsweise denkbar, dass die Messwerte beziehungsweise die zugehörigen physikalischen und/oder chemischen Eigenschaften bereits vorhandener und auf dem Markt erhältlicher Laminatpaneele, beispielsweise von Fußbodenlaminatpaneelen eines Herstellers, im Datenspeicher des Mobilfunkgerätes, insbesondere des Smartphones, hinterlegt sind. Diese Daten werden vorzugsweise durch eine App bereitgestellt. Wird nun eine physikalische und/oder chemische Messgröße gemessen, kann daraus beispielsweise durch Vergleich mit den hinterlegten Werten qualitativ die physikalische und/oder chemische Eigenschaft, die im jeweiligen Fall von Interesse ist, bestimmt werden. So kann selbst für den Fall, dass dem Benutzer des Verfahrens nur ein Laminatpaneel vorliegt, qualitativ bestimmt werden, ob dieses Laminatpaneel eine beispielsweise bessere Schälldämmeigenschaft aufweist als andere auf dem Markt erhältliche, jedoch beispielsweise im Geschäft aktuell nicht vorliegende Laminatpaneele. Auf diese Weise kann die Qualität eines Laminatpaneels relativ zur Qualität anderer Laminatpaneele bestimmt werden, ohne dass diese vorliegen müssen.

Vorzugsweise ist die physikalische Messgröße die Temperatur des Laminatpaneels an der Auflagefläche und das in dem Mobilfunkgerät integrierte oder mit dem Mobilfunkgerät verbundene Messinstrument ist ein Thermometer. Insbesondere Smartphones aber auch andere Mobilfunkgeräte verfügen über ein integriertes Thermometer, um dem Benutzer die aktuelle Temperatur abrufbar liefern zu können. Dieses Thermometer kann verwendet werden, um beispielsweise auch die Temperatur des Laminatpaneels an der Auflagefläche zu bestimmen.

Diese Temperatur kann beispielsweise auch berührungslos bestimmt werden, sofern beispielsweise das Smartphone ein integriertes Pyrometer zur berührungslosen Temperaturmessung aufweist. Um eine möglichst verlässliche und reproduzierbare Messung der Temperatur erreichen zu können, sollte darauf geachtet werden, dass Luftbewegungen, die beispielsweise durch Zugluft entstehen können, vermieden werden, da diese einen Einfluss auf die Temperaturmessungen haben können. Gleiches gilt für Umgebungstemperatur, die insbesondere vorteilhafterweise zuvor mit dem Thermometer des Mobilfunkgerätes bestimmt und gemessen werden kann. Auf diese Weise können weitere Umweltfaktoren, die einen Einfluss auf die Messung haben können, eliminiert oder bestimmt und in die Messung bzw. die spätere Auswertung der gemessenen Werte einbezogen werden.

Vorteilhafterweise wird aus der zu verschiedenen Zeitpunkten gemessenen Temperatur eine Wärmeleitfähigkeit und/oder eine Wärmedämmfähigkeit des Laminatpaneels bestimmt. Dazu kann vorzugsweise die Temperatur des Laminatpaneels vor dem Messen der Temperatur erhöht werden. Dies kann vorzugsweise an der Auflagefläche geschehen. Aber auch eine Temperaturerhöhung in einem vorbestimmten Abstand zu der Auflagefläche kann verwendet werden. Nachdem die Temperatur an dieser Stelle erhöht wurde, kann zu verschiedenen aufeinanderfolgenden Zeitpunkten mittels des in dem Mobilfunkgerät integrierten Thermometers die Temperatur bestimmt werden, so dass das Abkühlen des Laminatpaneels an der Auflagefläche verfolgt und dokumentiert werden kann. Aus diesem Abklingverhalten können Stoffeigenschaften wie beispielsweise die Wärmeleitfähigkeit und/oder die Wärmedämmfähigkeit des Laminatpaneels bestimmt werden.

Vorteilhafterweise wird die Temperatur an der Auflagefläche der Oberfläche des Gegenstandes durch eine Temperaturerhöhung im Mobilfunkgerät angehoben. Dies kann beispielsweise dadurch erreicht werden, dass ein in dem Mobilfunkgerät integrierter elektrischer Widerstand verwendet wird, um Wärme zu erzeugen, indem beispielsweise ein Strom durch ihn hindurchgeleitet wird. Natürlich sind auch andere Möglichkeiten vorstellbar, Wärme in die Oberfläche des Laminatpaneels einzuleiten, indem eine Funktion des Mobilfunkgerätes verwendet wird. So kann beispielsweise ein Programm in dem Mobilfunkgerät ausgeführt werden, das zu einer Erwärmung beispielsweise der Datenverarbeitungseinheit führt, durch die auch die Oberfläche des Laminatpaneels an der Auflagefläche erwärmt wird. Durch die erhöhte Temperatur innerhalb des Mobilfunkgerätes wird Wärme in die Auflagefläche der Oberfläche eingebracht, wo dass sich diese erwärmt.

Nachdem das Erwärmen der Oberfläche abgeschlossen ist, wird die Temperatur zu unterschiedlichen Zeitpunkten gemessen und so das Abkühlen der Auflagefläche des Laminatpaneels dokumentiert.

Natürlich ist auch der umgekehrte Weg möglich. Statt zunächst die Auflagefläche der Oberfläche des Laminatpaneels zu erwärmen und anschließend durch mehrfaches Messen der Temperatur den Abkühlvorgang zu dokumentieren, kann auch während des Aufwärmens der Auflagefläche der Oberfläche des Laminatpaneels die Temperatur zu unterschiedlichen Zeitpunkten gemessen werden. Um auf diese Weise die Wärmedämmfähigkeit und/oder die Wärmeleitfähigkeit und/oder die Wärmekapazität des jeweiligen Laminatpaneels jedoch nicht nur qualitativ, sondern auch quantitativ zu bestimmen, ist es nötig, die auf die jeweilige Weise entwickelte und in die Oberfläche eingebrachte Wärmemenge zu kennen. Aus dieser entwickelten und die Oberfläche eingebrachten Wärmemenge und dem Temperaturverlauf während des Aufwärmvorganges können anschließend die gewünschten Größen ermittelt werden.

Doch auch für den Fall, dass die Wärmemenge nicht bekannt ist, lässt sich beispielsweise ein Vergleich unterschiedlicher Laminatpaneele auch mit diesem Verfahren herstellen. Dazu wird das Verfahren nacheinander an unterschiedlichen Laminatpaneelen durchgeführt, wobei der Aufwärmvorgang durch die angesprochene Funktion des Mobilfunkgerätes für alle Laminatpaneele identisch verläuft. Auch wenn die tatsächlichen Zahlenwerte der so in die Oberfläche eingebrachten Wärmemengen nicht bekannt sind, kann doch davon ausgegangen werden, dass in die Oberfläche der einzelnen Laminatpaneele jeweils die gleiche Menge eingebracht wird, so dass die daraus ermittelbaren Wärmekapazitäten und/oder Wärmedämm- bzw. Wärmeleitfähigkeiten der einzelnen Laminatpaneele einfach miteinander verglichen werden können.

Unabhängig davon, auf welche Weise die Temperatur des jeweiligen Laminatpaneels bestimmt wird, ist vorzugsweise darauf zu achten, dass die äußeren Parameter, wie beispielsweise Umgebungstemperatur und beispielsweise Luftbewegungen für die Messung bei jedem Laminatpaneel identisch oder zumindest sehr ähnlich sind, um eine Vergleichbarkeit der Ergebnisse gewährleisten zu können.

Natürlich ist es auch möglich, die Temperaturerhöhung an der Auflagefläche der Oberfläche des Laminatpaneels nicht durch eine Temperaturerhöhung im Mobilfunkgerät hervorzurufen. Alternativ dazu hat es sich als vorteilhaft erwiesen, wenn die Temperatur durch Auflegen einer Hand auf die Auflagefläche oder in einem vorbestimmten Abstand dazu für eine vorbestimmte Zeitspanne erhöht wird, bevor das Mobilfunkgerät an der Auflagefläche angeordnet wird. Dabei ist es jedoch von Vorteil, wenn sowohl die vorbestimmte Zeitspanne als auch die Zeitspanne, die bis zum Anordnen des Mobilfunkgerätes an der Auflagefläche der Oberfläche vergeht, möglichst exakt eingehalten wird, um eine Reproduzierbarkeit der Ergebnisse zu erreichen. Dies ist insbesondere dann nötig, wenn für unterschiedliche Laminatpaneele dieses Verfahren durchgeführt und die anschließend erhaltenen Ergebnisse verglichen werden sollen.

Um diese vorbestimmte Zeitspanne möglichst genau einhalten und abmessen zu können, kann beispielsweise das Mobilfunkgerät beispielsweise über das Display die bereits vergangene oder noch verbleibende Zeit anzeigen. Dies kann beispielsweise in Form eines Countdowns erfolgen.

In einer besonderen Ausführungsform dieses Verfahrens wird über das Thermometer des Mobilfunkgerätes lediglich die Ausgangstemperatur vor dem Auflegen der Hand auf die Auflagefläche des Laminatpaneels und die Endtemperatur nach dem Auflegen der Hand bestimmt. Auf diese Weise kann die Termperaturdifferenz errechnet und dadurch die physikalische Eigenschaft bestimmt werden.

Neben den durch die Temperatur bestimmten physikalischen Eigenschaften, wie Wärmeleitfähigkeit und Wärmekapazität sind insbesondere bei Fußbodenlaminatpaneelen die Schalleigenschaften von großer Bedeutung für die Kaufentscheidung eines Kunden.

Vorteilhafterweise ist die physikalische Messgröße der Schall eines akustischen Signals, der mittels eines in dem Mobilfunkgerät integrierten oder mit dem Mobilfunkgerät verbundenen Mikrofons gemessen wird, wobei vor dem Messen des Schalls das akustische Signal in dem Laminatpaneel erzeugt wird. Dies ist insbesondere für Fußbodenbeläge, beispielsweise Fußbodenlaminätpaneele, sinnvoll, um die Schalldämm- bzw. Schallleiteigenschaften des jeweiligen Fußbodenbelages zu bestimmen und so die Geräuschbelastung durch Tritt- oder Raumschall zu bestimmen.

In einer vorteilhaften Ausgestaltung wird das akustische Signal durch eine Vibrationsfunktion des Mobilfunkgerätes erzeugt. Herkömmlicherweise verfügen Mobilfunkgeräte und insbesondere Smartphones über eine derartige Vibrationsfunktion, um beispielsweise auch ohne ein akustisches Signal den jeweiligen Benutzer des Mobilfunkgerätes auf beispielsweise einen eingehenden Anruf aufmerksam zu machen. Nachdem das Mobilfunkgerät an der Auflagefläche angeordnet wird, wird dieses Vibrieren des Mobilfunkgerätes bei eingeschalteter Vibrationsfunktion auf das Laminatpaneel übertragen und so ein akustisches Signal in dem Laminatpaneel erzeugt beziehungsweise in dem Laminatpaneel angeregt oder hervorgerufen. -

Alternativ oder zusätzlich dazu kann das akustische Signal auch durch Klopfen auf eine Oberseite und/oder Unterseite des Laminatpaneels in einem vorbestimmten Abstand zu der Auflagefläche erzeugt werden. In diesem Fall wird zunächst das Mobilfunkgerät an der Auflagefläche angeordnet und anschließend beispielsweise durch Klopfen mit einem Finger oder einem Gegenstand auf die Oberfläche das akustische Signal in dem Laminatpaneel erzeugt. Dabei ist von Vorteil, wenn das Klopfen in einem vorbestimmten und möglichst genau eingehaltenen Abstand zu der Auflagefläche des Laminatpaneels erzeugt, um ein reproduzierbares Ergebnis zu erhalten. Über das in dem Mobilfunkgerät integrierte Mikrofon wird der Schall bzw. das akustische Signal in dem Laminatpaneel gemessen. Über die Lautstärke des so gemessenen akustischen Signals können Eigenschaften wie beispielsweise die Schalldämmeigenschaft bestimmt werden. Ist gleichzeitig auch der Abstand, in dem das akustische Signal zu der Auflagefläche erzeugt wurde, bekannt, können auch Aussagen beispielsweise über die Schallleiteigenschaft und Schallleitfähigkeit des Laminatpaneels getroffen werden.

Ein akustisches Signal besteht dabei aus Schallwellen, die sich durch Frequenz und Amplitude, also Tonhöhe und Lautstärke beschreiben lassen. Für die Bestimmung der Schallleiteigenschaften und Schalldämmeigenschaften eines Laminatpaneels sind insbesondere die Lautstärke und der zeitliche Verlauf der Lautstärke eines akustischen Signals von Interesse. Daher wird bei dem hier beschriebenen Verfahren insbesondere über das im Mobilfunkgerät integrierte Mikrofon insbesondere die Lautstärke des akustischen Signals gemessen und das so ermittelte Messsignal weiterverarbeitet. Für spezielle Anwendungen kann es sinnvoll sein, dies beispielsweise frequenzabhängig durchzuführen. Dies bedeutet, dass beispielsweise eine frequenzabhängige Schalldämmeigenschaft bestimmt wird, indem entweder das angeregte beziehungsweise hervorgerufene akustische Signal nur Schallwellen einer bestimmten Frequenz beziehungsweise eines bestimmten Frequenzbandes enthält, oder, das mit dem im Mobilfunkgerät vorhandene Mikrofon nur Schallwellen bestimmter Frequenzen gemessen werden, während die Schallwellen mit anderen Frequenzen herausgefiltert werden. Dies ist beispielsweise durch eine bestimmte Software steuerbar. Natürlich sind auch Kombinationen dieser beiden Möglichkeiten denkbar.

Auch bei der Bestimmung der Schalleigenschaften kann das Verfahren für unterschiedliche Laminatpaneele nacheinander durchgeführt werden, so dass die so ermittelten Ergebnisses zueinander in Relation gesetzt und miteinander verglichen werden können. Auch in diesem Fall ist oftmals der exakte Zahlenwert beispielsweise der Schallleit- bzw. der Schalldämmfähigkeit nicht von Interesse, sondern die Kaufentscheidung wird oftmals nur von einem Vergleich dieser Eigenschaften für unterschiedliche Laminatpaneele abhängig gemacht.

Das Erzeugen des akustischen Signals durch Klopfen auf die Oberseite und/oder Unterseite des Laminatpaneels wird vorteilhafterweise in einem Abstand von weniger als 10 cm, vorteilhafterweise weniger als 8 cm, insbesondere weniger als 5 cm durchgeführt. Auch in diesem Fall kann die Lautstärke des Schalls oder des akustischen Signals zu unterschiedlichen aufeinander folgenden Zeitpunkten gemessen, so dass beispielsweise der Nachhall des erzeugten Signals messbar und erfassbar wird. Wie bereits bei der Messung der Temperatur können auch für die Messung des Schalls beziehungsweise des akustischen Signals Referenzwerte bestehender Produkte und Laminatpaneele beispielsweise durch eine App bereitgestellt und im elektronischen Datenspeicher des Mobilfunkgerätes hinterlegt und zum Vergleich der gemessenen Messgröße bzw. zu den bestimmten physikalischen Eigenschaften herangezogen werden.

Auf diese Weise kann aus dem zu verschiedenen Zeitpunkten gemessenen Schall beziehungsweise anderer Messgrößen eines akustischen Signals vorteilhafterweise eine Schallleitfähigkeit und/oder eine Schalldämmfähigkeit des Laminatpaneels bestimmt werden.

Neben den temperatur- und schallabhängigen physikalischen urid/oder chemischen Eigenschaften kann es für bestimmte Anwendungen von Vorteil sein, wenn das Laminatpaneel beispielsweise in der Lage ist, magnetische Felder abzuschirmen.

Vorzugsweise ist die physikalische Messgröße eine magnetische Feldstärke, die mittels eines in dem Mobilfunkgerät integrierten Magnetometers gemessen wird. Der oftmals in Mobilfunkgeräten und insbesondere Smartphones integrierte Kompass beinhaltet ein Magnetometer. Dieses misst Eigenschaften des magnetischen Feldes der Erde, wie beispielsweise dessen Ausrichtung und bestimmt so die jeweilige Himmelsrichtung. Das dazu in dem Mobilfunkgerät enthaltene Magnetometer zum Messen der magnetischen Feldstärke und der magnetischen Feldrichtung wird im vorliegenden Verfahren verwendet, um die magnetische Feldstärke als physikalische Messgröße zu messen. Um beispielsweise die Abschirmfähigkeit für magnetische Felder eines Laminatpaneels zu bestimmen, wird die magnetische Feldstärke als physikalische Messgröße einmal gemessen, wenn das Mobilfunkgerät an der Auflagefläche des Laminatpaneels angeordnet ist. Eine zweite Messung wird durchgeführt, wenn das Mobilfunkgerät nicht an der Anlagefläche angeordnet ist. Die Differenz der beiden magnetischen Feldstärken ist ein Maß für die Abschirmfähigkeiten des jeweiligen Gegenstandes. Auch in diesem Fall ist oftmals der tatsächliche Zahlenwert der Magnetfeldstärke nicht von Interesse. Vielmehr geht es auch bei der Abschirmfähigkeit magnetischer Felder um den Vergleich mehrerer Laminatpaneele miteinander, so dass das Verfahren auch in diesem Fall mit einer Mehrzahl unterschiedlicher Laminatpaneele durchgeführt wird, wobei die jeweils ermittelten Abschirmfähigkeiten miteinander verglichen werden können. Dazu ist eine Vergleichsmessung ohne ein Laminatpaneel nicht nötig.

Während für die Kompassfunktion des Smartphones die Richtung des Erdmagnetfeldes bestimmt wird, um so den magnetischen Nordpol zu ermitteln, muss für die Durchführung des hier beschriebenen Verfahrens insbesondere die Stärke des magnetischen Feldes bestimmt und für unterschiedliche Messungen in Relation zueinander gesetzt werden. Dazu sollten die zu vergleichenden Laminatpaneele am gleichen Ort vermessen werden, um so eine Vergleichbarkeit der Ergebnisse zu erreichen. Werden beispielsweise Laminatpaneele in unterschiedlichen Kaufhäusern und Baumärkten miteinander verglichen, kann es durch die unterschiedliche bauliche Gestaltung der jeweiligen Gebäude zu veränderten Messergebnissen kommen. Ist beispielsweise unterhalb des Baumarktes ein Keller beispielsweise mit einer Stahlbetondecke angeordnet, kann durch diese Anordnung bereits das Erdmagnetfeld abgeschirmt werden, während dies bei Gebäuden beispielsweise ohne Keller nicht oder in anderem Maße der Fall ist. Eine Vergleichbarkeit der Messungen ist ohne genaue Kenntnis dieser Umstände nur schwer oder gar nicht möglich. Erst für den Fall, dass die einzelnen Laminatpaneele am gleichen Ort vermessen werden, ist eine Vergleichbarkeit der so erhaltenen Messergebnisse gegeben.

Insbesondere für Laminatpaneele, die in Wohnräumen beispielsweise als Fußboden- oder Wandverkleidung verwendet werden sollen, ist es für den Endkunden von großem Interesse, auf die chemischen Eigenschaften derartiger Laminatpaneele zu kennen.

Vorteilhafterweise wird dabei beim Messen der wenigstens einen physikalischen und/oder chemischen Messgröße eine aus dem Lamintpaneel ausgasende Menge einer Substanz gemessen. Dabei kann es sich beispielsweise um Formaldehyd oder eine flüchtige organische Verbindung (VOC) handeln. Natürlich sind auch andere Substanzen, die gegebenenfalls aus Laminatpaneelen ausgasen können, denkbar.

Insbesondere für gesundheitsschädliche Substanzen ist es von Vorteil, wenn das jeweilige Laminatpaneel eine möglichst geringe Menge dieser Substanz emittiert. Da die Hersteller entsprechender Laminatpaneele folglich dafür sorgen, dass die ausgasende Menge möglichst gering ist, kann es zur Erhöhung der Messgenauigkeit des hier beschriebenen Verfahrens sinnvoll sein, beispielsweise die Temperatur zumindest an der Auflagefläche der Oberseite des Laminatpaneels zu erhöhen und somit zeitweilig die ausgasende Menge der jeweiligen Substanz ebenfalls zu erhöhen. Dadurch wird erreicht, dass die zu messende Menge der emittierten Substanz so groß ist, dass eine verlässliche und genaue Messung möglich ist. Wird gleichzeitig die Temperatur an der Auflagefläche der Oberseite des Laminatpaneels gemessen, lassen sich auch in diesem Fall unterschiedliche Laminatpaneele gegebenenfalls unterschiedlicher Hersteller gut miteinander vergleichen.

Die hier beschriebenen physikalischen und/oder chemischen Eigenschaften, die mit einem erfindungsgemäßen Verfahren bestimmt werden können, sind nur beispielsweise Ausführungsformen des hier beschriebenen Verfahrens. Insbesondere können weitere chemische und/oder physikalische Eigenschaften bestimmt werden.

Zudem ist es möglich, mehrere der genannten Eigenschaften gleichzeitig zu bestimmen, da die jeweils verwendeten Messinstrumente, die in dem Mobilfunkgerät vorhanden sind, oftmals unabhängig voneinander arbeiten und zudem die jeweiligen physikalischen und/oder chemischen Messgrößen einander nicht oder sogar in vorteilhafter Weise beeinflussen. Wie bereits dargelegt, kann es für die Bestimmung der Menge einer ausgasenden Substanz von Vorteil sein, auch die Temperatur des Laminatpaneels insbesondere an der Auflagefläche zu bestimmen. Gleichzeitig könnte beispielsweise auch über das Magnetometer die Magnetfeldstärke bestimmt werden. Die verschiedenen physikalischen und/oder chemischen Messgrößen beeinflussen einander nicht. Eine Schallmessung beziehungsweise die Bestimmung der Lautstärke eines akustischen Signals ist dagegen möglicherweise wegen störender Vibrationen, die in dem Laminatpaneel erzeugt beziehungsweise hervorgerufen werden müssen, nicht mit allen anderen Messungen kombinierbar, ohne die bestimmten Messwerte bei anderen Eigenschaften zu beeinflussen.

Vorteilhafterweise handelt es sich bei dem Mobilfunkgerät um ein Smartphone und/oder bei dem Laminatpaneel um ein Fußbodenpaneel. Auch wenn vorliegenden die hier beschriebenen Verfahren für Fußbodenpaneele beschrieben wurden, sind sie doch auf für andere Paneele denkbar und ausführbar. Mit den hier beschriebenen Verfahren lassen sich folglich unterschiedlich physikalische und/oder chemische Eigenschaften von Laminatpaneelen schnell und einfach mittels eines Smartphones bestimmen, so dass ein sehr geringer apparativer Aufwand und nahezu keine zusätzlichen Kosten für den jeweiligen Benutzer auftreten.

Natürlich sind die erfindungsgemäßen Verfahren nicht auf die beschrieben Ausführungsformen beschränkt. Viele Mobilfunkgeräte, insbesondere Smartphones, verfügen über weitere Messinstrumente, mit denen unterschiedlichste Messgrößen aufgenommen und so verschiedene physikalische Eigenschaften von Laminatpaneelen bestimmt werden können. Heutige Mobilfunkgeräte verfügen beispielsweise über eine Kamera. Mit dieser ist es möglich, beispielsweise ein Dekor eines Laminatpaneels zu fotografieren und so aufzunehmen, dass dieses Dekor beispielsweise leicht mit anderen Dekoren, die von anderen Laminatpaneelen aufgenommen wurden, verglichen werden kann. Auch eine Dekorerkennung, bei der beispielsweise festgestellt wird, welches Holz durch das Dekor imitiert werden soll, ist möglich. Dazu sollten in dem Datenspeicher des Mobiltelefons Datensätze der Maserung und/oder Farben und Farbverteilungen der unterschiedlichen Holzarten hinterlegt werden, die mit dem abfotografierten Dekor verglichen werden können.

Über ein derartiges abfotografiertes Dekor kann beispielsweise auch die Druckqualität, wie beispielsweise die Auflösung des aufgebrachten Druckes, kontrolliert, bestimmt und so mit der bestimmten Druckqualität anderer Laminatpaneele verglichen werden. Auch eine Farbbestimmung und ein Farbvergleich unterschiedlicher und so aufgenommener Dekore ist möglich. Oftmals werden Laminatpaneele für Fußböden verwendet, die beispielsweise bei einer Renovierung eines Zimmers oder eines Hauses erneuert werden sollen. Dabei werden oftmals bereits vorhandene Möbel weiter verwendet, so dass es aus ästhetischen Gründen sinnvoll und wünschenswert ist, wenn die bereits vorhandenen Möbel farblich zum ausgewählten Dekor der Laminatpaneele passen. Die Auswahl der gleichen Holzsorte bzw. der Imitation der gleichen Holzsorte für Möbel und Laminatpaneele ist dabei oftmals nicht ausreichen, da auch hier große Unterschiede beispielsweise in der Farbgebung und in der Strukturierung des Dekors vorliegen können. Mit der hier beschriebenen App ist es daher möglich, beispielsweise ein Möbelstück, beispielsweise einen Schrank oder einen Tisch zu fotografieren und beispielsweise eine vorherrschende Farbe oder eine Farbtemperatur zu bestimmen. Gleiches kann anschließend mit einem Laminatpaneel geschehen, so dass die so aufgenommenen Farben miteinander verglichen werden können.

Zudem können beispielsweise die Pakete, in die die Laminatpaneele verpackt sind oder auch in die Laminatpaneele selbst, mit Chips, beispielsweise RFID-Chips versehen werden. Diese reagieren auf ausgesandte elektromagnetische Strahlung, die beispielsweise von dem Mobilfunkgerät ausgesandt werden kann. Der RFID-Chip wird so aktiviert und kann Informationen beispielsweise über Produktdetails aber auch Verfügbarkeit, Lieferzeiten oder Produktstandorte in einem Baumarkt oder einem großen Warenhaus an das Mobiltelefon versenden. Damit können über das Smartphone oder das Mobiltelefon weitere Informationen über die Laminatpaneele ermittelt werden.

Ein Computerprogramm mit Programmcodemitteln ist insbesondere auf einem maschinenlesbaren Träger gespeichert und ist eingerichtet zum Durchführen eines hier beschriebenen Verfahrens, wenn das Computerprogramm auf einer Datenverarbeitungseinheit eines Mobilfunkgerätes abläuft. Diese kann insbesondere die Datenverarbeitungseinrichtung eines Smartphones sein. Das Computerprogramm in dem elektronischen Datenspeicher des Smartphones oder eines anderen Mobilfunkgerätes gespeichert und kann beispielsweise über ein Bedienelement, das beispielsweise ein Touchscreen sein kann, gestartet werden.

Das Computerprogramm, das als sogenannte "App" ausgebildet sein kann, kann auch auf einem zentralen Server gespeichert und beispielsweise zum Download bereitgestellt werden.

Ein Mobilfunkgerät, insbesondere ein Smartphone, umfasst ein integriertes Thermometer und/oder ein integriertes Mikrofon und/oder ein integriertes Magnetometer beispielsweise für eine Kompassfunktion und/oder weiteren Messeinrichtungen und/oder eine Kamera und eine elektrische Steuerung, die eingerichtet ist zum Durchführen eines Verfahrens nach einem der vorstehenden Ansprüche. Ein entsprechendes Mobilfunkgerät verfügt vorzugsweise über einen elektronischen Datenspeicher und eine elektronische Datenverarbeitungseinrichtung. In dem elektronischen Datenspeicher ist vorteilhafterweise ein Programm, eine sogenannte "App" gespeichert, die beispielsweise frei oder gegen einen Kostenbeitrag herunterladbar ist. Dieses Programm wird in der elektronischen Datenverarbeitungseinrichtung des Mobilfunkgerätes ausgeführt, sodass die hier beschriebenen Verfahren durchführbar sind.

Mit einem erfindungsgemäßen Verfahren und/oder einem erfindungsgemäßen Mobilfunkgerät lassen sich folglich produktspezifische Informationen für unterschiedliche Laminatpaneele einfach sammeln und speichern. Sie können zur Verarbeitung in weiterführenden Programmen verwendet oder beispielsweise in einer Datenbank gespeichert werden. Auf diese Weise lassen sich beispielsweise Produkte, die bei unterschiedlichen Händlern begutachtet und untersucht wurden, zu einem späteren Zeitpunkt in Ruhe miteinander vergleichen, so dass die Kaufentscheidung auf eine bessere und möglichst objektive Basis gestellt werden kann. Dazu ist eine Anwesenheit im jeweiligen Verkaufsraum eines der Händler nicht mehr nötig.

Nachdem das Programm einmal auf dem Mobilfunkgerät gespeichert wurde, entstehen für den Anwender keine weiteren Kosten. Der Hersteller entsprechender Laminatpaneele kann die "App", also das elektronische Datenverarbeitungsprogramm beispielsweise auch kostenlos zur Verfügung stellen, so dass überhaupt keine zusätzlichen Kosten für den Benutzer des Mobilfunkgerätes entstehen. Die für Laien ansonsten schwer erfassbaren physikalischen und/oder chemischen Eigenschaften der jeweiligen Laminatpaneele werden auf diese Weise einfach und sicher objektiv miteinander vergleichbar. Auf gegebenenfalls schwammige und unpräzise Werbeaussagen unterschiedlicher Hersteller muss nicht mehr zurückgegriffen werden.

Prinzipiell ist ein derartiges Verfahren für jede physikalische und/oder chemische Eigenschaft eines Laminatpaneels denkbar, zu der es eine korrespondierende physikalische und/oder chemische Messgröße gibt, die durch ein in dem Mobilfunkgerät integriertes Messinstrument messbar ist. Insofern sind die hier aufgeführten Messgrößen Temperatur, Schall bzw. Lautstärke und magnetische Feldstärke sowie die Menge eines ausgasenden oder emittierenden Substanz wie beispielsweise Formaldehyd oder VOC nur beispielhaft und nicht einschränkend auszulegen. Es ist auch denkbar, separate Messinstrument-Module für Smartphones oder andere Arten von Mobilfunkgeräten vorzusehen, die über entsprechende Datenschnittstellen mit dem Mobilfunkgerät verbunden werden können, so dass das Verfahren auch für physikalische und/oder chemische Eigenschaften ausführbar wird, die nicht durch ein herstellerseitig im Mobilfunkgerät integriertes Messinstrument zugänglich sind. Auch derartige Messinstrumente werden im Sinne der vorliegenden Erfindung als in dem Mobilfunkgerät integriert angesehen. Wichtig ist lediglich, dass die durch ein Messinstrument aufgenommenen Messwerte einer physikalischen und/oder chemischen Messgröße an das Mobilfunkgerät übertragen und in diesem weiterverarbeitet werden können.

Das jeweilige Messen der entsprechenden physikalischen und/oder chemischen Messgröße kann dabei mit zeitlicher Verzögerung nach dem Aktivieren der "App" in dem Mobilfunkgerät geschehen, um Bedienungseffekte auszuschließen.

Mit Hilfe einer Zeichnung wird nachfolgend ein Ausführungsbeispiel der vorliegenden Erfindung näher erläutert. Es zeigt:

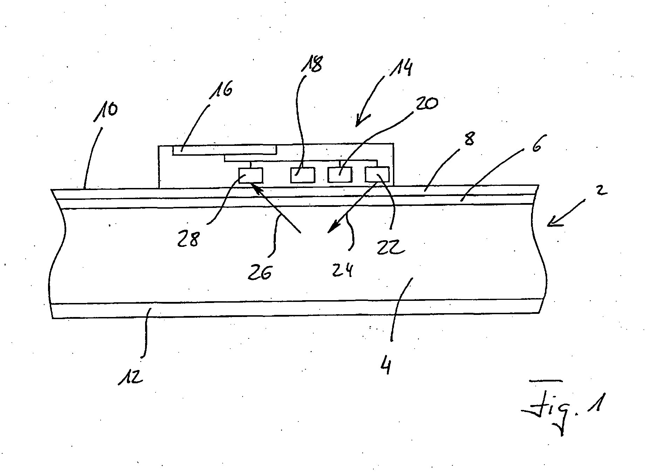

- Figur 1: die schematische Darstellung eines Mobilfunkgerätes an einem Laminatpaneel.

Figur 1 zeigt ein Laminatpaneel 2, das aus mehreren unterschiedlichen Lagen besteht. Das Laminatpaneel 2 verfügt über eine Trägerplatte 4, an deren Oberfläche beispielsweise eine Dekorlage 6 und darüber eine abriebfeste Lage 8 angeordnet sind. Die abriebfeste Lage 8 bildet eine Oberfläche 10 des Laminatpaneels. An der der Dekorlage 6 gegenüberliegenden Seite der Trägerplatte 4 ist ein Gegenzug 12 angeordnet. Durch diesen Gegenzug 12 wird verhindert, dass eine Oberseite und eine Unterseite der Trägerplatte 4 durch die unterschiedlichen aufgebrachten Schichten unterschiedlichen Zugbelastungen unterworfen werden. Diese würden zu einem Verziehen des Laminatpaneels 2, der sogenannten Schüsselung, führen.

An der Oberfläche 10 des Laminatpaneels 2 ist ein Mobilfunkgerät 14 angeordnet, das über ein Display 16 verfügt. Das Mobilfunkgerät 14 ist mit der dem Display 16 abgewandten Seite an der Oberfläche 10 des Laminatpaneels 2 angeordnet. Dabei ist es ausreichend, wenn das Mobilfunkgerät 14 auf die Oberfläche 10 des Laminatpaneels 2 aufgelegt wird.

Schematisch dargestellt befinden sich im Inneren des Mobilfunkgerätes eine Datenverarbeitungseinheit 18 sowie ein Datenspeicher 20. Im Datenspeicher 20 ist ein Programm, eine sogenannte App, gespeichert, die es der Datenverarbeitungseinheit 18 erlaubt, ein Verfahren gemäß der vorliegenden Erfindung durchzuführen.

Bei dem in Figur 1 gezeigten Ausführungsbeispiel ist schematisch ein Sender 22 dargestellt, der eine Zustandsänderung einer physikalischen und/oder chemischen Eigenschaft, die durch einen ersten Pfeil 24 angedeutet ist, in dem Laminatpaneel 2 hervorruft. Dies kann beispielsweise ein Schallsignal sein, das durch eine Vibrationseinheit hervorgerufen wird oder eine Temperaturerhöhung, die durch beispielsweise einen nun mit elektrischem Strom durchflossenen elektrischen Widerstand hervorgerufen wird, sein. Aber auch andere Zustandsänderungen sind denkbar. Natürlich müssen diese nicht von dem Mobilfunkgerät 14 erzeugt werden.

Das Laminatpaneel 2 reagiert auf diese Zustandsänderung, was durch einen zweiten Pfeil 26 angedeutet ist. Diese Reaktion des Laminatpaneels 2 wird durch ein Messinstrument 28 detektiert. Handelt es sich bei der Zustandsänderung, die vom Sender 22 hervorgerufen wird, beispielsweise um ein Schallsignal, ist das Messinstrument 28 beispielsweise ein Mikrofon. Wird durch den Sender 22 beispielsweise die Temperatur an einer Stelle im Laminatpaneel 2 verändert, ist das Messinstrument 28 vorteilhafterweise ein Thermometer. Wichtig ist, dass mit dem Messinstrument 28 die vom Sender 22 hervorgerufene Zustandsänderung detektiert werden kann. Mit den so ermittelten Werten kann in der Datenverarbeitungseinheit 18 das Verfahren ausgeführt und so die physikalische Eigenschaft des Laminatpaneels 2 bestückt werden.

### Bezugszeichenliste

- 2: Laminatpaneel
- 4: Trägerplatte
- 6: Dekorlage
- 8: abriebfeste Lage
- 10: Oberfläche
- 12: Gegenzug
- 14: Mobilfunkgerät
- 16: Display
- 18: Datenverarbeitungseinheit
- 20: Datenspeicher
- 22: Sender
- 24: erster Pfeil
- 26: zweiter Pfeil
- 28: Messinstrument

## Patentansprüche

1. Verfahren zum zumindest qualitativen Bestimmen wenigstens einer physikalischen und/oder chemischen Eigenschaft eines Laminatpaneels (2) mittels eines Mobilfunkgerätes (14), wobei das Verfahren die folgenden Schritte aufweist:
a) Anordnen des Mobilfunkgerätes (14) an einer Oberfläche (10) des Laminatpaneels (2),
b) Messen mindestens einer physikalischen und/oder chemischen Messgröße mittels eines in dem Mobilfunkgerät (14) integrierten oder mit dem Mobilfunkgerät (14) über entsprechende Datenschnittstellen verbundenen Messinstrumentes (28) und
c) zumindest qualitatives Bestimmen der mindestens einen physikalischen und/oder chemischen Eigenschaft aus der gemessenen mindestens einen physikalischen und/oder chemischen Messgröße.

2. Verfahren nach Anspruch 1, **dadurch gekennzeichnet, dass** die mindestens eine physikalische und/oder chemische Messgröße mehrfach zu unterschiedlichen Zeitpunkten gemessen wird.

3. Verfahren nach Anspruch 1 oder 2, **dadurch gekennzeichnet, dass** die Schritte a) und b) für unterschiedliche Laminatpaneele (2) durchgeführt werden und das qualitative Bestimmen der mindestens einen physikalischen und/oder chemischen Eigenschaft durch Vergleich der bei unterschiedlichen Laminatpaneelen (2) gemessenen physikalischen und/oder chemischen Messgrößen stattfindet.

4. Verfahren nach Anspruch 1, 2 oder 3, **dadurch gekennzeichnet, dass** die gemessene physikalische Messgröße die Temperatur des Laminatpaneels (2) an einer Auflagefläche, an der das Mobilfunkgerät mit der Oberfläche (10) in Kontakt ist, ist und dass das in dem Mobilfunkgerät (14) integrierte oder mit dem Mobilfunkgerät (14) verbundene Messinstrument (28) ein Thermometer ist.

5. Verfahren nach Anspruch 4, **dadurch gekennzeichnet, dass** aus der zu verschiedenen Zeitpunkten gemessenen Temperatur des Laminatpaneels (2) eine Wärmeleitfähigkeit und/oder Wärmedämmfähigkeit des Laminatpaneels (2) bestimmt wird.

6. Verfahren nach einem der vorstehenden Ansprüche, **dadurch gekennzeichnet, dass** eine Temperatur des Laminatpaneels (2) an der Auflagefläche vor dem Messen der mindestens physikalischen und/oder chemischen Messgröße erhöht wird.

7. Verfahren nach Anspruch 6, **dadurch gekennzeichnet, dass** die Temperatur des Laminatpaneels (2) an der Auflagefläche durch eine Temperaturerhöhung im Mobilfunkgerät (14) erhöht wird.

8. Verfahren nach Anspruch 6 oder 7, **dadurch gekennzeichnet, dass** die Temperatur an der Auflagefläche des Laminatpaneels (2) durch Auflegen einer Hand auf die Auflagefläche für eine vorbestimmte Zeitspanne erhöht wird, bevor das Mobilfunkgerät (14) an der Auflagefläche angeordnet wird.

9. Verfahren nach einem der vorstehenden Ansprüche, **dadurch gekennzeichnet, dass** die gemessene physikalische Messgröße der Schall eines akustischen Signals ist, der mittels eines in dem Mobilfunkgerät (14) integrierten oder mit dem Mobilfunkgerät (14) verbundenen Mikrofons gemessen wird, wobei vor dem Messen des Schalls das akustische Signal in dem Laminatpaneel (2) erzeugt wird.

10. Verfahren nach Anspruch 9, **dadurch gekennzeichnet, dass** das akustische Signal durch eine Vibrationsfunktion des Mobilfunkgerätes (14) erzeugt wird.

11. Verfahren nach Anspruch 9 oder 10, **dadurch gekennzeichnet, dass** das akustische Signal durch Klopfen auf eine Oberseite und/oder Unterseite des Laminatpaneels (2) in einem vorbestimmten Abstand zu der Auflagefläche erzeugt wird.

12. Verfahren nach Anspruch 10 oder 11, **dadurch gekennzeichnet, dass** aus dem zu verschiedenen Zeitpunkten gemessenen Schall eine Schallleitfähigkeit und/oder Schalldämmfähigkeit des Laminatpaneels (2) bestimmt wird.

13. Verfahren nach einem der vorstehenden Ansprüche, **dadurch gekennzeichnet, dass** beim Messen der wenigstens einen physikalischen und/oder chemischen Messgröße eine aus dem Laminatpaneel (2) ausgasende Menge einer Substanz gemessen wird.

## Claims

1. Method for the at least qualitative determination of at least one physical and/or chemical property of a laminate panel (2) by means of a mobile radio device (14), wherein the method comprises the following steps:
a) arranging the mobile radio device (14) on a surface (10) of the laminate panel (2),
b) measuring at least one physical and/or chemical measurement variable by means of a measuring instrument (28) which is integrated into the mobile radio device (14) or connected to the mobile radio device (14) via corresponding data interfaces, and
c) at least qualitative determination of the at least one physical and/or chemical property on the basis of the measured, at least one physical and/or chemical measurement variable.

2. Method according to Claim 1, **characterized in that** the at least one physical and/or chemical measurement variable is measured repeatedly at different times.

3. Method according to Claim 1 or 2, **characterized in that** the steps a) and b) are carried out for different laminate panels (2), and the qualitative determination of the at least one physical and/or chemical property takes place by comparing the physical and/or chemical measurement variables measured on different laminate panels (2).

4. Method according to Claim 1, 2 or 3, **characterized in that** the measured physical measurement variable is the temperature of the laminate panel (2) at a supporting face at which the mobile radio device is in contact with the surface (10), and **in that** the measuring instrument (28) which is integrated into the mobile radio device (14) or connected to the mobile radio device (14) is a thermometer.

5. Method according to Claim 4, **characterized in that** the thermal conductivity and/or thermal insulating capability of the laminate panel (2) is determined on the basis of the temperature of the laminate panel (2) measured at different times.

6. Method according to one of the preceding claims, **characterized in that** a temperature of the laminate panel (2) at the supporting face is increased before the measurement of the at least one physical and/or chemical measurement variable.

7. Method according to Claim 6, **characterized in that** the temperature of the laminate panel (2) at the supporting face is increased by increasing the temperature in the mobile radio device (14).

8. Method according to Claim 6 or 7, **characterized in that** the temperature at the supporting face of the laminate panel (2) is increased by resting a hand on the supporting face for a predetermined period of time before the mobile radio device (14) is arranged on the supporting face.

9. Method according to one of the preceding claims, **characterized in that** the measured physical variable is the sound of an acoustic signal which is measured by means of a microphone which is integrated into the mobile radio device (14) or connected to the mobile radio device (14), wherein the acoustic signal is generated in the laminate panel (2) before the measurement of the sound.

10. Method according to Claim 9, **characterized in that** the acoustic signal is generated by means of a vibration function of the mobile radio device (14).

11. Method according to Claim 9 or 10, **characterized in that** the acoustic signal is generated by knocking on an upper side and/or underside of the laminate panel (2) at a predetermined distance from the supporting face.

12. Method according to Claim 10 or 11, **characterized in that** the sound conductivity and/or sound insulating capability of the laminate panel (2) is determined on the basis of the sound measured at different times.

13. Method according to one of the preceding claims, **characterized in that** during the measurement of the at least one physical and/or chemical measurement variable a quantity of a substance which is outgassed from the laminate panel (2) is measured.

## Revendications

1. Procédé de détermination au moins qualitative d'au moins une propriété physique et/ou chimique d'un panneau laminé (2) au moyen d'un appareil de radiocommunication mobile (14), le procédé comprenant les étapes suivantes :
a) disposer l'appareil de radiocommunication mobile (14) sur une surface (10) du panneau laminé (2),
b) mesurer au moins une grandeur de mesure physique et/ou chimique à mesurer au moyen d'un instrument de mesure (28) connecté avec l'appareil de radiocommunication mobile (14) par des interfaces de données correspondantes ou intégré dans l'appareil de radiocommunication mobile (14), et
c) déterminer au moins qualitativement ladite au moins une propriété physique et/ou chimique à partir de ladite au moins une grandeur de mesure physique et/ou chimique.

2. Procédé selon la revendication 1, **caractérisé en ce que** l'au moins une grandeur de mesure physique et/ou chimique est mesurée plusieurs fois à différents moments.

3. Procédé selon la revendication 1 ou 2, **caractérisé en ce que** les étapes a) et b) sont réalisées pour différents panneaux laminés (2) et la détermination qualitative de l'au moins une propriété physique et/ou chimique a lieu par comparaison des grandeurs de mesure physiques et/ou chimiques sur différents panneaux laminés (2).

4. Procédé selon la revendication 1, 2 ou 3, **caractérisé en ce que** la grandeur physique de mesure est la température du panneau laminé (2) sur une surface d'appui, sur laquelle l'appareil de radiocommunication mobile (14) est en contact avec la surface (10), et **en ce que** l'instrument de mesure (28) connecté avec l'appareil de radiocommunication mobile (14) ou intégré dans l'appareil de radiocommunication mobile (14) est un thermomètre.

5. Procédé selon la revendication 4, **caractérisé en ce qu'à** partir de la température mesurée du panneau laminé (2) à différents moments, on détermine une conductivité thermique et/ou capacité d'isolation thermique du panneau laminé (2).

6. Procédé selon l'une des revendications précédentes, **caractérisé en ce qu'on** augmente une température du panneau laminé (2) sur la surface d'appui avant la mesure de l'au moins une grandeur de mesure physique et/ou chimique.

7. Procédé selon la revendication 6, **caractérisé en ce qu'on** augmente la température du panneau laminé (2) sur la surface d'appui par une augmentation de température dans l'appareil de radiocommunication mobile (14).

8. Procédé selon la revendication 6 ou 7, **caractérisé en ce qu'**on augmente la température sur la surface d'appui du panneau laminé (2) en appliquant une main sur la surface d'appui pour une période de temps prédéterminée, avant de placer l'appareil de radiocommunication mobile (14) sur la surface d'appui.

9. Procédé selon l'une des revendications précédentes, **caractérisé en ce que** la grandeur physique de mesure est le son d'un signal acoustique, qui est mesuré au moyen d'un microphone connecté avec l'appareil de radiocommunication mobile (14) ou intégré dans l'appareil de radiocommunication mobile (14), le signal acoustique étant créé dans le panneau laminé (2) avant la mesure du son.

10. Procédé selon la revendication 9, **caractérisé en ce que** le signal acoustique est créé par une fonction vibratoire de l'appareil de radiocommunication mobile (14).

11. Procédé selon la revendication 9 ou 10, **caractérisé en ce qu'**on crée le signal acoustique en tapant sur un côté supérieur et/ou inférieur du panneau laminé (2) à une distance prédéterminée de la surface d'appui.

12. Procédé selon la revendication 10 ou 11, **caractérisé en ce qu'à** partir du son mesuré à différents moments, on détermine une conductibilité acoustique et/ou capacité d'absorption sonore du panneau laminé (2).

13. Procédé selon l'une des revendications précédentes, **caractérisé en ce que** lors de la mesure de l'au moins une grandeur de mesure physique et/ou chimique on mesure une quantité d'une substance dégazant du panneau laminé (2).
